# EUROPEAN PATENT APPLICATION

(11) **EP 4 579 277 A1**
(43) Date of publication of application: **02.07.2025**
(21) Application number: 23857290.3
(22) Date of filing: 18.08.2023
(51) Int. Cl.: G01S 7/497, G01B 11/00, G01S 17/87, G01S 17/931

(54) **MEASURING DEVICE, CONTROL DEVICE, AND PROGRAM**

(30) Priority: 26.08.2022 JP 2022134636
(71) Applicant: Koito Manufacturing Co., Ltd., Shinagawa-ku, Tokyo 141-0001 (JP)
(72) Inventor: WATANO, Yuichi, Shizuoka-shi, Shizuoka 424-8764 (JP)
(74) Representative: Zimmermann, Tankred Klaus
(86) International application number: PCT/JP2023/029787
(87) International publication number: WO 2024/043178

(57) **Abstract**

An object of the present invention is to reduce the restrictions on the installation location. A measuring device (1) according to the present disclosure includes a light emitting-receiving unit (10) and a control device (50). The light emitting-receiving unit (10) includes a light emitter (21) that emits light according to a control signal, a light receiver (31) that receives reflected light of the light emitted from the light emitter and outputs a light reception signal, and a storage (41) that stores correction data. The control device (50) is connected to the light emitting-receiving unit (10) in a replaceable manner, and outputs the control signal to the light emitting-receiving unit (10) and measures coordinates of a reflection point at which the reflected light is generated based on the light reception signal acquired from the light emitting-receiving unit (10). The control device (50) according to the present disclosure reads the correction data from the storage (41) of the light emitting-receiving unit (10) when the light emitting-receiving unit (10) is connected to the control device (50), and measures the coordinates based on the correction data.

## Description

### TECHNICAL FIELD

The present invention relates to a measuring device, a control device, and a program.

### BACKGROUND ART

A light detection and ranging or a laser imaging detection and ranging (LiDAR) has been known as a measuring device that detects a three-dimensional shape in a measurement area by emitting measurement light to the measurement area and receiving reflected light (reflected light obtained after the measurement light has been reflected on a target object in the measurement area).

### CITATION LIST

### PATENT LITERATURE

Patent Literature 1: JP-T-2021-500554

### SUMMARY OF INVENTION

### PROBLEMS TO BE SOLVED BY INVENTION

In a conventional measuring device, a light emitter that emits measurement light toward a measurement area, a light receiver that receives reflected light from the measurement area, and a controller that controls the light emitter and calculates coordinates of a target object in the measurement area based on a light reception signal of the light receiver are integrally formed. As a result, it is difficult to mount the measuring device on a vehicle or the like having many restrictions on an installation location.

An object of the present invention is to reduce the restrictions on the installation location.

### SOLUTION TO PROBLEMS

In order to accomplish the above-described object, one aspect of the present invention is a measuring device including a light emitting-receiving unit including a light emitter that emits light according to a control signal, a light receiver that receives reflected light of the light emitted from the light emitter and outputs a light reception signal, and a storage that stores correction data, and a control device connected to the light emitting-receiving unit in a replaceable manner and configured to output the control signal to the light emitting-receiving unit and measure coordinates of a reflection point at which the reflected light is generated based on the light reception signal acquired from the light emitting-receiving unit, in which the control device reads the correction data from the storage of the light emitting-receiving unit when the light emitting-receiving unit is connected to the control device, and measures the coordinates based on the correction data.

In addition, problems disclosed in the present application and a method for solving these problems will be clarified by description of embodiments for carrying out the invention and the drawings.

### EFFECTS OF INVENTION

According to the present invention, the restrictions on the installation location can be reduced.

### BRIEF DESCRIPTION OF DRAWINGS

Figs. 1A and 1B are a view and a diagram for describing a measuring device 1 of a first embodiment;
Fig. 2 is a view for describing a light emitter 21 and a light receiver 31 of a light emitting-receiving unit 10;
Fig. 3 is a chart for describing a measurement method;
Fig. 4 is an explanatory diagram of a reference table of a corrector 54.
Fig. 5A is a diagram for describing a method of acquiring light emission correction data; Fig. 5B is a diagram for describing a method of acquiring light reception correction data; Fig. 5C is a diagram for describing a method of acquiring coordinate correction data;
Figs. 6A and 6B are diagrams for describing processing when a control device 50 acquires correction data from the light emitting-receiving unit 10;
Figs. 7A and 7B are diagrams for describing a second embodiment;
Figs. 8A and 8B are diagrams for describing a third embodiment;
Figs. 9A and 9B are diagrams for describing operation under a predetermined condition; and
Fig. 10 is a diagram for describing the configuration of a comparative example.

### DESCRIPTION OF EMBODIMENTS

Hereinafter, embodiments of the present invention will be described with reference to the drawings. Note that in the following description, the same or similar components are denoted by the same reference numerals, and overlapping description thereof may be omitted.

### === First Embodiment ===

### <Configuration>

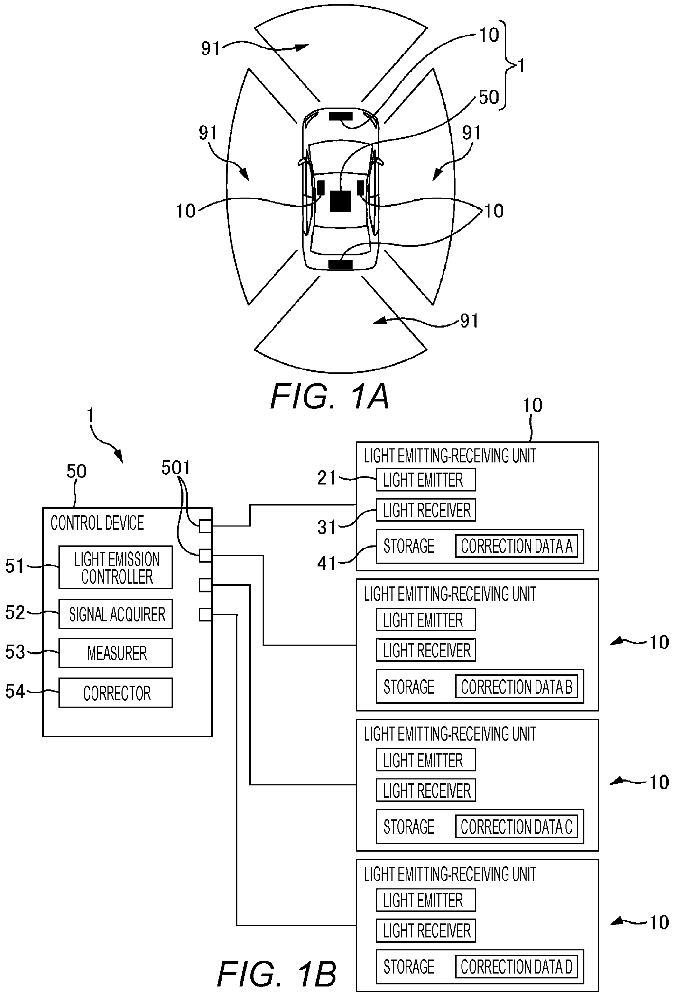

Figs. 1A and 1B are a view and a diagram for describing a measuring device 1 of a first embodiment.

The measuring device 1 is a device that measures a target object in a measurement area 91. Fig. 1A illustrates that measurement areas 91 are set on the front, rear, and side of a vehicle. The measuring device 1 measures the target object in the measurement area 91 by emitting measurement light toward the measurement area 91 and receiving reflected light from the measurement area 91. The measuring device 1 may be referred to as a lidar device (LiDAR; Light Detection and Ranging, Laser Imaging Detection and Ranging). Here, the measuring device 1 measures the three-dimensional coordinates (X coordinate, Y coordinate, and Z coordinate) of a reflection point at which the reflected light is generated. Note that the measuring device 1 may only measure a distance (Z coordinate) to the reflection point. Alternatively, the measuring device 1 may measure point cloud data by measuring the three-dimensional coordinates of a large number of reflection points, or may further analyze the point cloud data to determine the attribute or the like of the target object.

The measuring device 1 has a light emitting-receiving unit 10 and a control device 50. Here, the measuring device 1 has four light emitting-receiving units 10. Note that the number of light emitting-receiving units 10 in the measuring device 1 is not limited to four and may be one or a plural number other than four. In the present embodiment, the light emitting-receiving unit 10 is configured as a unit independent of the control device 50, and can be attached to the control device 50 in a replaceable manner. Here, the four light emitting-receiving units 10 are arranged in the vehicle to set the measurement areas 91 on the front, rear, and side of the vehicle.

The light emitting-receiving unit 10 emits the measurement light toward the measurement area 91, and receives the reflected light from the measurement area 91. The light emitting-receiving unit 10 has a light emitter 21, a light receiver 31, and a storage 41.

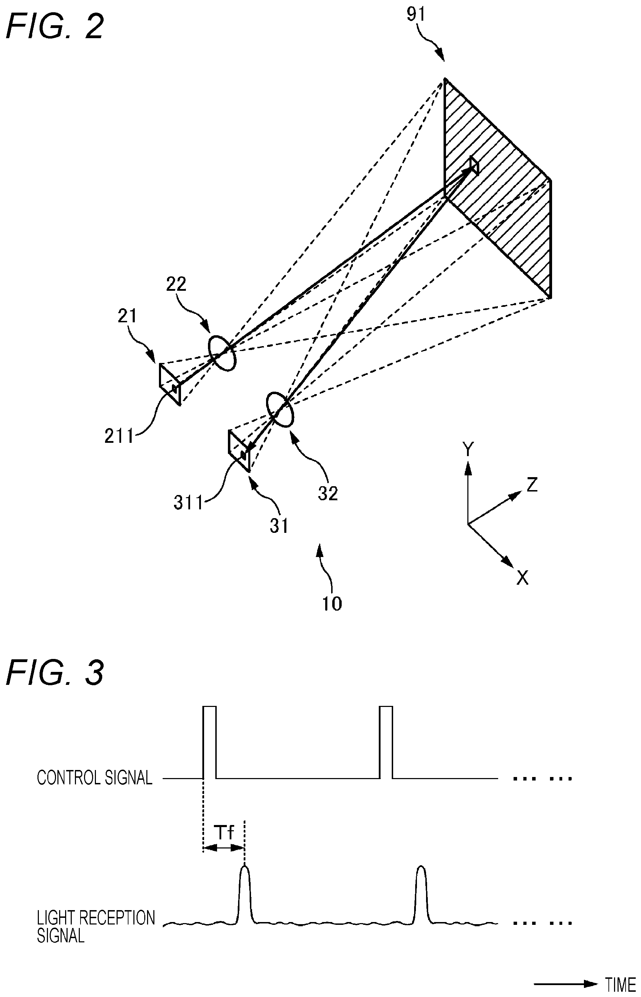

Fig. 2 is a view for describing the light emitter 21 and light receiver 31 of the light emitting-receiving unit 10. The illustrated light emitting-receiving unit 10 has the light emitter 21 and the light receiver 31, and also has a light projection optical system 22 and a light receiving optical system 32. The light emitter 21 and the light projection optical system 22 form an irradiation unit, and the light receiver 31 and the light receiving optical system 32 form a light receiving unit.

The light emitter 21 emits the measurement light. The light emitter 21 includes one or more light emitting elements 211. The light emitting element 211 is an element that converts an electric signal into an optical signal and emits laser light. Here, the light emitter 21 is formed by two-dimensionally arranging the plurality of light emitting elements 211 along the X direction and the Y direction. The light emitter 21 emits light in accordance with a control signal from the control device 50. The light emitter 21 may individually emit light from each light emitting element 211, or may collectively emit light from the plurality of light emitting elements 211. The light projection optical system 22 is an optical system that irradiates the measurement area 91 with the light emitted from the light emitter 21. The light emitted from a certain light emitting element 211 is emitted to a corresponding region of the measurement area 91 via the light projection optical system 22. Note that the light projection optical system 22 may include a rotary mirror (for example, polygon mirror) and the measurement area 91 may be scanned with the light emitted from the light emitter 21 (light emitting element 211) by the rotary mirror.

The light receiver 31 receives the reflected light and outputs a light reception signal. The light receiver 31 includes one or more light receiving elements 311. The light receiving element 311 is an element that converts an optical signal into an electric signal. Here, the light receiver 31 is formed by two-dimensionally arranging the plurality of light receiving elements 311 along the X direction and the Y direction. The light receiver 31 outputs the light reception signal corresponding to the amount of received light. Here, each light receiving element 311 of the light receiver 31 outputs the light reception signal corresponding to the amount of received light. The light receiving optical system 32 is an optical system that causes the light receiver 31 to receive the reflected light from the measurement area 91. Each light receiving element 311 of the light receiver 31 is associated with a predetermined region of the measurement area 91 via the light receiving optical system 32, and receives light (reflected light) from the corresponding region.

Each light receiving element 311 of the light receiver 31 is associated with a predetermined light emitting element 211 of the light emitter 21. The light emitted from a certain light emitting element 211 is received by a corresponding light receiving element 311 via the light projection optical system 22 and the light receiving optical system 32. Thus, the light emitter 21 and the light receiver 31 are integrally formed, and a positional relationship therebetween is maintained. That is, in the light emitting-receiving unit 10, the light emitter 21 and the light receiver 31 are fixed to a common housing (not illustrated) such that the positional relationship between the light emitter 21 and the light receiver 31 is maintained.

Note that the light emitting-receiving unit 10 is not provided with a controller that controls the light emission timing and the like of the light emitter 21. The light emitter 21 of the light emitting-receiving unit 10 is driven in accordance with the control signal input from the control device 50. Furthermore, the light emitting-receiving unit 10 is not provided with a processor that performs arithmetic processing based on the light reception signal from the light receiver 31 (signal output from the light receiving element 311 according to the amount of received light). The light emitting-receiving unit 10 outputs the light reception signal from the light receiver 31 to the control device 50, and the control device 50 performs arithmetic processing (for example, arithmetic processing for calculating the coordinates) based on the light reception signal. Here, the light emitting-receiving unit 10 outputs an analog signal corresponding to the light reception signal to the control device 50. Note that the light receiver 31 (light receiving element 311) may be configured to output a digital signal as the light reception signal, and the light emitting-receiving unit 10 may be configured to output the digital signal as the light reception signal to the control device 50.

The storage 41 (see Fig. 1B) includes a member that stores data. Here, the storage 41 includes a ROM. In the first embodiment, correction data is stored in the storage 41.

The correction data is data for correcting measurement processing. The correction data may be referred to as calibration data. The correction data includes, for example, light emission correction data for correcting the light emitter 21, light reception correction data for correcting the light receiver 31, arithmetic correction data (for example, coordinate correction data) for correcting the arithmetic processing (for example, arithmetic processing for calculating the coordinates) based on the light reception signal, and the like. For example, the light emission correction data is data for correcting a variation in the intensity of the light emitted from the light emitting element 211 (in other words, data indicating the variation in the intensity of the light emitted from the light emitting element 211). Furthermore, for example, the light reception correction data is data for correcting a variation in the amount of received light indicated by the light reception signal output from the light receiving element 311 (in other words, data indicating a variation in the signal value of the light reception signal output from the light receiving element 311). In addition, for example, the arithmetic correction data is data (coordinate correction data) for correcting the positional deviation of the coordinates of the reflection point. Note that the correction data may include at least one of the light emission correction data, the light reception correction data, and the arithmetic correction data (coordinate correction data), and does not necessarily include all these types of data.

The light emitting-receiving unit 10 is not provided with a processor that performs the arithmetic processing based on the data (here, correction data) stored in the storage 41. As will be described later, the data stored in the storage 41 is read by the control device 50, and the control device 50 performs the arithmetic processing based on the data (here, correction processing based on the correction data).

The control device 50 is a device that controls the light emitting-receiving unit 10. The control device 50 controls the light emitter 21 of the light emitting-receiving unit 10 (causes the light emitter 21 to emit light) by outputting the control signal to the light emitting-receiving unit 10. Further, the control device 50 acquires the light reception signal from the light emitting-receiving unit 10, and calculates the coordinates of the reflection point based on the light reception signal. The control device 50 has an arithmetic device and a storage device (not illustrated). The arithmetic device is, for example, an arithmetic processing device such as a CPU or a GPU. Part of the arithmetic device may be formed by an analog arithmetic circuit. The storage device includes a main storage device and an auxiliary storage device, and is a device that stores a program and data. Various types of processing are executed by the arithmetic device executing the program stored in the storage device. Here, the control device 50 includes an electronic control unit (ECU) mounted on an automobile.

The control device 50 has a light emission controller 51, a signal acquirer 52, a measurer 53, and a corrector 54. Note that when a program is introduced into the ECU (equivalent to the control device 50) of the automobile and the ECU executes the program, the ECU (control device 50) implements a light emission control function (light emission controller 51), a signal acquisition function (signal acquirer 52), a measurement function (measurer 53), and a correction function (corrector 54).

The light emission controller 51 generates the control signal for controlling the light emitter 21, and outputs the control signal to the light emitting-receiving unit 10 (light emission control function). The light emission controller 51 outputs a control signal for controlling the timing of emitting the light from the light emitter 21, the intensity of light emitted from the light emitter 21, and the like to the light emitting-receiving unit 10.

The signal acquirer 52 acquires the light reception signal from the light emitting-receiving unit 10 (signal acquisition function). For example, the signal acquirer 52 converts the light reception signal which is an analog signal into a digital value. The signal acquirer 52 passes the light reception signal acquired from the light emitting-receiving unit 10 to the measurer 53 (and the corrector 54).

The measurer 53 measures the coordinates of the reflection point based on the light reception signal acquired by the signal acquirer 52 (measurement function).
Here, the measurer 53 calculates the distance (Z coordinate) to the reflection point based on the light reception signal.

Fig. 3 is a chart for describing a measurement method.

The control signal is illustrated on the upper side in the figure. The measurement light is emitted from the light emitter 21 (light emitting element 211) at the timing of a pulse included in the control signal. The measurement area 91 is irradiated with the light emitted from the light emitter 21 via the light projection optical system 22. The light reflected by the surface (reflection point) of the target object in the measurement area 91 is received by the light receiver 31 (light receiving element 311) via the light receiving optical system 32. The light receiving element 311 receives pulsed reflected light. The light reception signal is illustrated on the lower side in the figure. The light receiver 31 (light receiving element 311) outputs the light reception signal corresponding to the amount of received light. The measurer 53 detects the arrival timing of the reflected light based on the light reception signal. In addition, the measurer 53 detects time Tf from emission of the light to arrival of the reflected light based on the timing of the pulse of the control signal (light emission timing) and the light arrival timing. The time Tf corresponds to time during which the light reciprocates between the measuring device 1 and the reflection point. Then, the measurer 53 calculates the distance to the reflection point (Z coordinate of the reflection point) based on the time Tf. Note that when the time from the emission of the light to the arrival of the reflected light is Tf and the speed of the light is C, the distance L is L = C × Tf/2.

The measurer 53 may measure not only the distance to the reflection point (Z coordinate of the reflection point) but also the three-dimensional coordinates (X coordinate, Y coordinate, and Z coordinate) of the reflection point. Note that the measurer 53 calculates the X coordinate and Y coordinate of the reflection point based on the position of a region on the measurement area 91, which corresponds to the light emitter 21 or the light receiver 31. Alternatively, the measuring device 1 may measure the point cloud data by measuring the three-dimensional coordinates of a large number of reflection points, or may further analyze the point cloud data to determine the attribute or the like of the target object.

The corrector 54 acquires the data from the storage 41 of the light emitting-receiving unit 10. In the first embodiment, the corrector 54 acquires the correction data from the storage 41 of the light emitting-receiving unit 10. The corrector 54 monitors whether or not a new light emitting-receiving unit 10 is connected to a port 501 of the control device 50, and when it is detected that the new light emitting-receiving unit 10 is connected to the port 501 of the control device 50, reads the correction data from the storage 41 of the light emitting-receiving unit 10 via the port 501.

The corrector 54 performs the correction processing based on the correction data (correction function). Here, the corrector 54 corrects at least the processing performed by one of the light emission controller 51, the signal acquirer 52, and the measurer 53 based on the correction data.

For example, the corrector 54 corrects the control signal output from the light emission controller 51 based on the light emission correction data, and corrects the variation in the intensity of the light emitted from the light emitting element 211 of the light emitter 21. For example, the corrector 54 corrects the control signal for the light emitting element 211 that emits the light having the intensity higher than a reference such that the light is weaken and emitted. Moreover, the corrector 54 corrects the control signal for the light emitting element 211 that emits the light having the intensity lower than the reference such that the light is strengthened and emitted. As described above, the corrector 54 corrects the control signal to be output from the light emission controller 51 based on the light emission correction data such that each light emitting element 211 emits the light with a predetermined intensity (reference intensity). By correcting the control signal, the pulse height (current value or voltage value) of the control signal illustrated in Fig. 3 is corrected. When the light emission controller 51 outputs the control signal corrected based on the light emission correction data to the light emitting-receiving unit 10 and the light emitting-receiving unit 10 emits the light according to the corrected control signal from the light emitter 21, the light with the predetermined intensity (corrected intensity; reference intensity) is emitted from the light emitter 21.

Furthermore, the corrector 54 corrects the light reception signal based on the light reception correction data, and corrects the variation in the signal value of the light reception signal output from the light receiving element 311 of the light receiver 31. For example, the corrector 54 corrects the light reception signal for the light receiving element 311 that outputs the light reception signal indicating a greater amount of received light than a reference such that the amount of received light indicated by the light reception signal decreases. The corrector 54 corrects the light reception signal for the light receiving element 311 that outputs the light reception signal indicating a smaller amount of received light than the reference such that the amount of received light indicated by the light reception signal increases. As described above, the corrector 54 corrects the light reception signal output from the light receiver 31 based on the light reception correction data such that the light reception signal indicates a predetermined amount of received light with respect to the reference amount of received light. By correcting the reception signal, the pulse height of the light reception signal illustrated in Fig. 3 is corrected.

After the measurer 53 has calculated the coordinates of the reflection point based on the light reception signal, the corrector 54 corrects the coordinates calculated by the measurer 53 based on the coordinate correction data. For example, when the coordinates calculated by the measurer 53 include an error caused by the element (light emitting element 211 and light receiving element 311) attachment error, aberration of the optical system (light projection optical system 22 and light receiving optical system 32), or the like, the corrector 54 corrects the coordinates calculated by the measurer 53 based on the coordinate correction data so as to suppress the influence of the error.

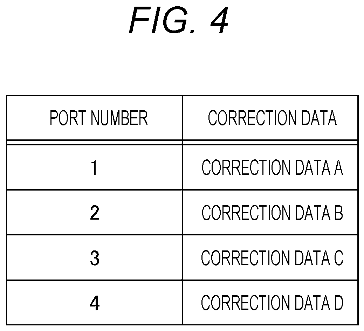

Fig. 4 is an explanatory diagram of a reference table of the corrector 54.

The control device 50 includes a plurality of ports 501 for connecting the light emitting-receiving unit 10 (see Fig. 1B). Here, the control device 50 includes four ports 501. In the reference table, a port number and the correction data are associated with each other. For example, a first port is associated with correction data A, and a second port is associated with correction data B.

The control device 50 (corrector 54) measures the coordinates using the light emitting-receiving unit 10 connected to the port 501 based on the correction data corresponding to such a port 501. For example, when the coordinates are measured using the light emitting-receiving unit 10 connected to the first port, the control device 50 corrects the control signal for the light emitting-receiving unit 10 connected to the first port, corrects the light reception signal acquired from the light emitting-receiving unit 10 via the first port, or corrects the coordinates calculated based on the light reception signal acquired via the first port, based on the correction data A. As a result, correction according to the characteristics of each light emitting-receiving unit 10 can be performed. Note that a method of setting the reference table will be described later.

### <Generation of Correction Data>

In an inspection step before shipping of the light emitting-receiving unit 10, the characteristics (individual difference) of the light emitting-receiving unit 10 are inspected, and the correction data according to the characteristics of the light emitting-receiving unit 10 is generated. In the inspection step, the light emitting-receiving unit 10 is connected to an inspection control device 60 different from the control device 50 above.

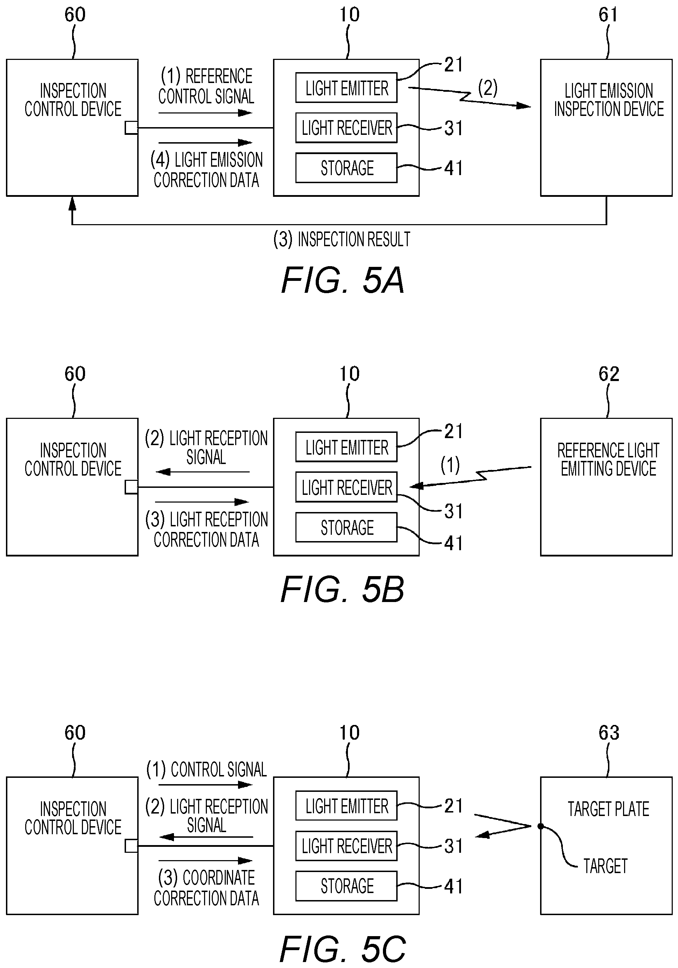

Fig. 5A is a diagram for describing a method of acquiring the light emission correction data. The inspection control device 60 outputs a control signal as a reference to each light emitting element 211 of the light emitter 21 of the light emitting-receiving unit 10. The light emitting-receiving unit 10 emits the light from each light emitting element 211 according to the reference control signal. Note that the intensity of the light emitted from each light emitting element 211 varies. A light emission inspection device 61 inspects the intensity of the light emitted from each light emitting element 211, and outputs an inspection result to the inspection control device 60. The inspection control device 60 generates the correction data (light emission correction data) for each light emitting element 211 based on the intensity of the light emitted from each light emitting element 211, and stores the correction data in the storage 41.

Fig. 5B is a diagram for describing a method of acquiring light reception correction data; A reference light emitting device 62 emits light (reference light) having a reference intensity. Each light receiving element 311 of the light receiver 31 of the light emitting-receiving unit 10 receives the reference light and outputs the light reception signal. Note that the amount of received light indicated by the light reception signal output from each light receiving element 311 varies. The inspection control device 60 generates the correction data (light reception correction data) for each light receiving element 311 based on the amount of received light indicated by the light reception signal, and stores the correction data in the storage 41.

Note that although the light emission correction data and the light reception correction data are acquired here, the present invention is not limited thereto. For example, after a reflector having a predetermined reflectance has been disposed so as to face the light emitting-receiving unit 10, the inspection control device 60 outputs the reference control signal to each light emitting element 211 of the light emitter 21 of the light emitting-receiving unit 10, and causes each light receiving element 311 of the light receiver 31 to receive the reflected light to acquire the light reception signal of each light receiving element 311. The inspection control device 60 generates the correction data (light reception correction data) for each light receiving element 311 based on the amount of received light indicated by the light reception signal, and stores the correction data in the storage 41. As described above, only the light reception correction data may be stored in the storage 41 without the light emission correction data being stored in the storage 41.

Fig. 5C is a diagram for describing a method of acquiring coordinate correction data; After a target plate 63 having a target indicating a reference position has been disposed so as to have a predetermined positional relationship with the light emitting-receiving unit 10, the inspection control device 60 outputs the control signal to each light emitting element 211 of the light emitter 21 of the light emitting-receiving unit 10, causes the light receiver 31 to receive the reflected light to acquire the light reception signal from the light receiver 31, and calculates the coordinates of the reflection point based on the light reception signal. Then, the inspection control device 60 generates the correction data (coordinate correction data) for correcting the coordinates of the reflection point based on a difference between the position (coordinates) of the target of the target plate 63 disposed in the predetermined positional relationship with the light emitting-receiving unit 10 and the position (coordinates) of the target obtained from the coordinates of the reflection point, and stores the correction data in the storage 41.

### <Acquisition of Correction Data>

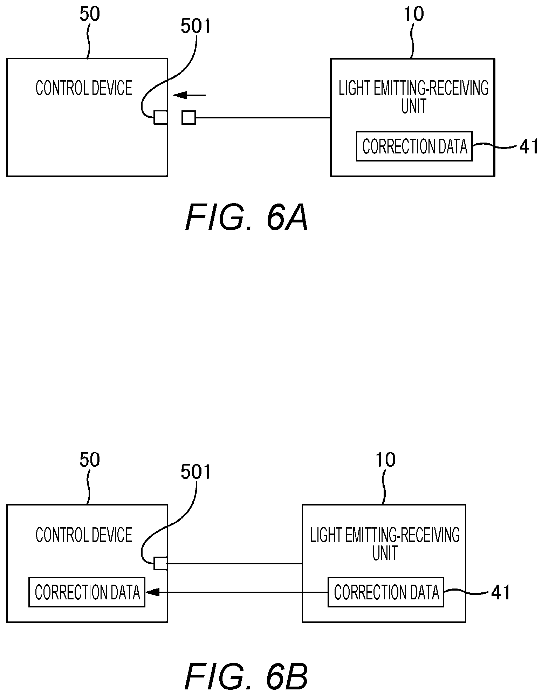

Figs. 6A and 6B are diagrams for describing processing when the control device 50 acquires the correction data from the light emitting-receiving unit 10.

As already described above, the light emitting-receiving unit 10 is attached to the control device 50 in a replaceable manner. When a new light emitting-receiving unit 10 is connected to the control device 50 (see Fig. 6A), the control device 50 reads the correction data from the storage 41 of the light emitting-receiving unit 10 (Fig. 6B). Note that the corrector 54 of the control device 50 monitors whether or not the new light emitting-receiving unit 10 is connected to the port 501 of the control device 50, and when it is detected that the new light emitting-receiving unit 10 is connected to the port 501 of the control device 50, reads the correction data from the storage 41 of the light emitting-receiving unit 10 via the port 501. The correction data includes, for example, the light emission correction data, the light reception correction data, and the coordinate correction data, and the control device 50 (corrector 54) measures the coordinates based on the correction data by correcting the control signal output from the light emission controller 51 based on the light emission correction data, correcting the light reception signal output from the light receiver 31 based on the light reception correction data, or correcting the coordinates of the reflection point calculated based on the light reception signal based on the coordinate correction data.

The control device 50 includes the plurality of ports 501, and the corrector 54 monitors, for each port 501, whether or not the new light emitting-receiving unit 10 is connected thereto. When it is detected that the new light emitting-receiving unit 10 is connected to a certain port 501, the corrector 54 generates the reference table illustrated in Fig. 4 (in other words, updates information in the reference table) by associating the port number (for example, first port) with the correction data (for example, correction data A) read from the storage 41 of the light emitting-receiving unit 10 via the port 501.

### <Comparative Example>

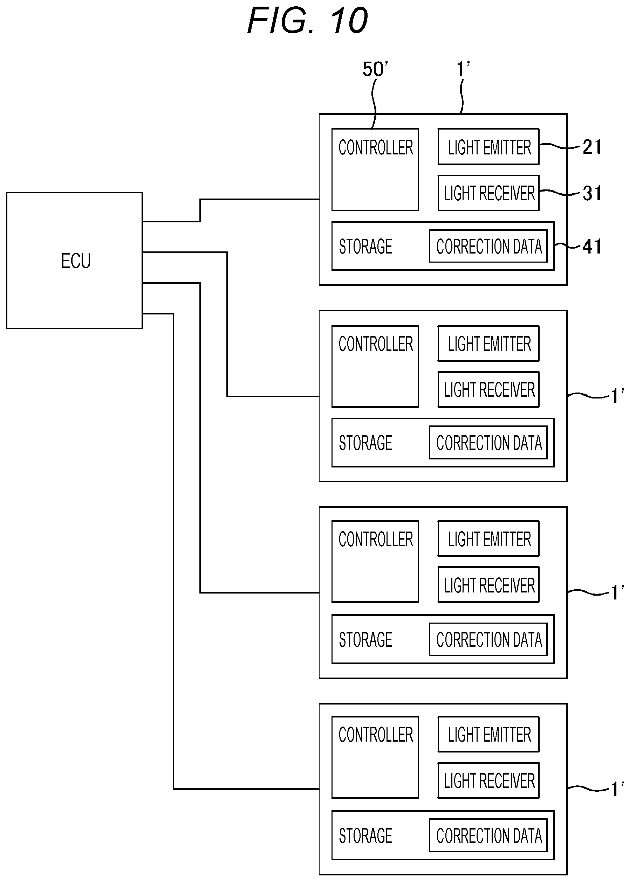

Fig. 10 is a diagram for describing the configuration of a comparative example.

In a measuring device 1' of the comparative example, the light emitter 21, the light receiver 31, and a controller 50' that calculates the coordinates based on the light reception signal are integrally formed. In the comparative example, the coordinates are measured by the measuring device 1', and a measurement result is output to the ECU (therefore, in the comparative example, the ECU does not measure the coordinates). Since the measuring device 1' of the comparative example includes the controller 50' as compared to the above-described light emitting-receiving unit 10, a housing thereof may be increased in size and it may be difficult to mount the measuring device on a vehicle or the like having many restrictions on an installation location. In addition, the measuring device 1' of the comparative example is more expensive than the above-described light emitting-receiving unit 10 because the measuring device 1' includes the controller 50'. For this reason, in the comparative example, when the light emitter 21 or the light receiver 31 is broken down, it is necessary to replace the entirety of the measuring device 1' including the controller 50', which increases a cost.

On the other hand, the light emitting-receiving unit 10 of the present embodiment does not include the controller 50' as compared to the measuring device 1' of the comparative example, and therefore, can be decreased in size. Further, in the present embodiment, since the light emitting-receiving unit 10 is connected to the control device 50 in a replaceable manner, when the light emitter 21 or the light receiver 31 is broken down, it is only necessary to replace the broken light emitting-receiving unit 10, so that it is possible to cope with the breakdown at a low cost.

When the light emitting-receiving unit 10 and the control device 50 are independent of each other, a correction data storage location becomes a problem. On the other hand, in the first embodiment, the correction data is stored in the storage 41 of the light emitting-receiving unit 10. As a result, the light emitter 21, the light receiver 31, and the storage 41 that has stored the correction data according to the characteristics of the light emitter 21 and the light receiver 31 can be integrated. Further, in the first embodiment, the control device 50 is configured to read the correction data from the storage 41 of the light emitting-receiving unit 10 when the light emitting-receiving unit 10 is connected to the control device 50. As a result, even if the correction data is stored in the light emitting-receiving unit 10 independent of the control device 50, the control device 50 can measure the coordinates based on the correction data.

In the comparative example, in a case of measuring the plurality of measurement areas 91, it is necessary to prepare a plurality of measuring devices 1' including controllers 50', and for this reason, it may be difficult to mount the plurality of measuring devices on a vehicle or the like having many restrictions on an installation location. In addition, in the comparative example, in the case of measuring the plurality of measurement areas 91, it is necessary to prepare the plurality of measuring devices 1' including the controllers 50', which increases a cost. On the other hand, in the present embodiment, the plurality of light emitting-receiving units 10 can be connected to one control device 50, and the light emitting-receiving unit 10 can be decreased in size as compared to the measuring device 1' of the comparative example. Thus, the plurality of light emitting-receiving units 10 can be easily installed even in a vehicle having many restrictions on an installation location. In addition, the light emitting-receiving unit 10 of the present embodiment is inexpensive as compared to the measuring device 1' of the comparative example, and therefore, it is possible to measure the plurality of measurement areas 91 at a low cost.

### === Second Embodiment ===

In the first embodiment, the correction data is stored in the storage 41 of the light emitting-receiving unit 10. Note that a correction data storage location is not limited thereto. In a second embodiment, correction data is stored outside a measuring device 1.

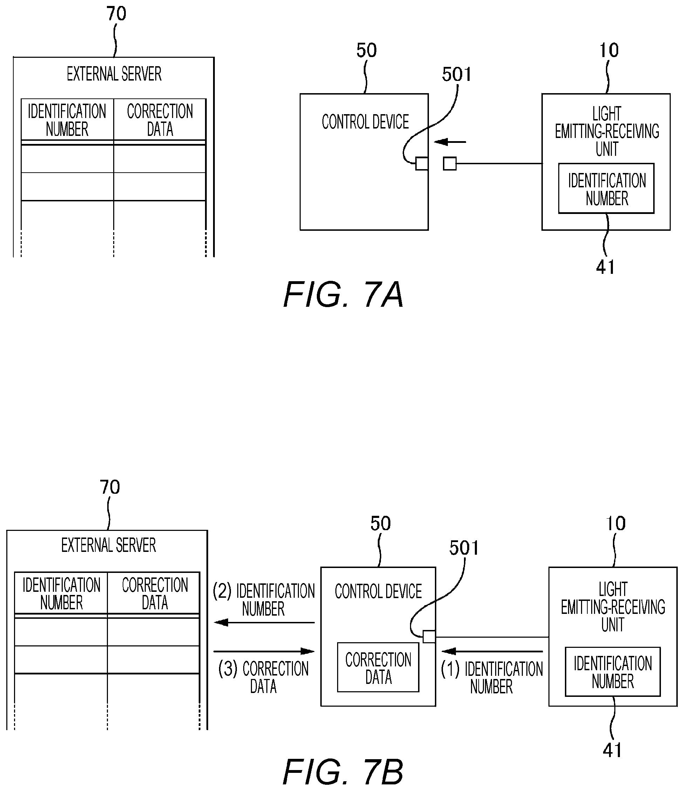

Figs. 7A and 7B are diagrams for describing the second embodiment.

An identification number is assigned to a light emitting-receiving unit 10, and is stored in a storage 41 of the light emitting-receiving unit 10. When the correction data is generated in an inspection step before shipping of the light emitting-receiving unit 10 (see Figs. 5A to 5C), a data set in which the identification number of the light emitting-receiving unit 10 to be inspected is associated with the correction data for the light emitting-receiving unit 10 is registered in a database of an external server 70. In the database of the external server 70, the correction data corresponding to each of the light emitting-receiving units 10 manufactured in a factory is registered in association with the identification number of such a light emitting-receiving unit 10. Note that the external server 70 may be, for example, a server managed by a manufacturer of the light emitting-receiving unit 10, a server managed by a manufacturer of an automobile on which a measuring device 1 is mounted, or a server on the cloud.

As in the first embodiment, the light emitting-receiving unit 10 is attached to a control device 50 in a replaceable manner. When a new light emitting-receiving unit 10 is connected to the control device 50 (see Fig. 7A), the control device 50 (corrector 54) reads the identification number from the storage 41 of the light emitting-receiving unit 10 (Fig. 7B). Note that the control device 50 (corrector 54) monitors whether or not the new light emitting-receiving unit 10 is connected to a port 501 of the control device 50, and when it is detected that the new light emitting-receiving unit 10 is connected to the port 501 of the control device 50, reads the identification number from the storage 41 of the light emitting-receiving unit 10 via the port 501.

The light emitting-receiving unit 10 of the second embodiment includes a communicator (not illustrated) communicable with the external server 70, and the corrector 54 acquires the identification number from the storage 41 of the light emitting-receiving unit 10, then transmits the identification number to the external server 70 via the communicator, and requests the correction data (see Fig. 7B). When received the identification number from the control device 50, the external server 70 refers to the database based on the identification number, and transmits the correction data corresponding to the identification number to the control device 50 (see Fig. 7B). When received the correction data from the external server 70, the control device 50 passes the correction data to the corrector 54. The correction data the correction data includes, for example, light emission correction data, light reception correction data, and coordinate correction data, and the control device 50 (corrector 54) measures coordinates based on the correction data by correcting a control signal output from a light emission controller 51 based on the light emission correction data, correcting a light reception signal output from a light receiver 31 based on the light reception correction data, or correcting the coordinates of a reflection point calculated based on the light reception signal based on the coordinate correction data.

Note that also in the second embodiment, the control device 50 may include a plurality of ports 501. In this case, the corrector 54 monitors, for each port 501, whether or not a new light emitting-receiving unit 10 is connected thereto, and when it is detected that the new light emitting-receiving unit 10 is connected to a certain port 501, acquires a port number and an identification number read from the storage 41 of the light emitting-receiving unit 10 via such a port 501. The corrector 54 transmits the identification number to the external server 70 to request correction data, acquires the correction data corresponding to the identification number from the external server 70, and generates the reference table illustrated in Fig. 4 with the port number and the correction data associated with each other (in other words, updates the information in the reference table). Then, the control device 50 (corrector 54) measures the coordinates using the light emitting-receiving unit 10 connected to the port 501 based on the correction data corresponding to such a port 501.

### === Third Embodiment ===

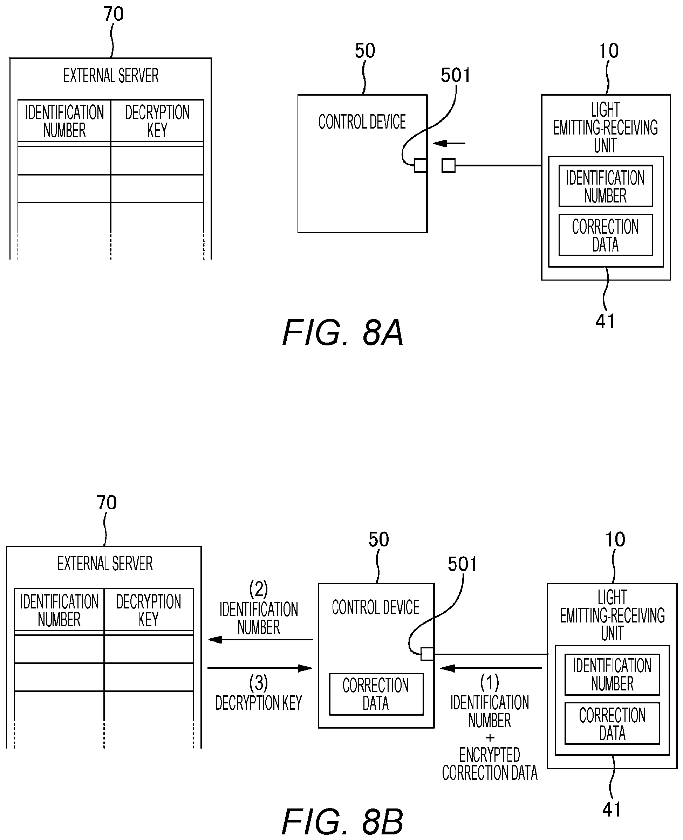

Figs. 8A and 8B are diagrams for describing a third embodiment.

An identification number is assigned to a light emitting-receiving unit 10. When correction data is generated in an inspection step before shipping of the light emitting-receiving unit 10 (see Figs. 5A to 5C), the identification number of the light emitting-receiving unit 10 and correction data for the light emitting-receiving unit 10 are stored in a storage 41 of the light emitting-receiving unit 10 to be inspected. At this time, the correction data to be stored in the storage 41 of the light emitting-receiving unit 10 is encrypted. A decryption key for decrypting the encrypted correction data is registered in a database of an external server 70 in association with the identification number. That is, in the third embodiment, when the correction data is generated in the inspection step before shipping of the light emitting-receiving unit 10 (see Figs. 5A to 5C), a data set in which the identification number of the light emitting-receiving unit 10 to be inspected is associated with the decryption key for the encrypted correction data stored in the storage 41 of the light emitting-receiving unit 10 is registered in the database of the external server 70.

Also in the third embodiment, the light emitting-receiving unit 10 is attached to a control device 50 in a replaceable manner. In the third embodiment, when a new light emitting-receiving unit 10 is connected to the control device 50 (see Fig. 8A), the control device 50 (corrector 54) reads the identification number and the encrypted correction data from the storage 41 of the light emitting-receiving unit 10 (Fig. 8B). Note that the control device 50 (corrector 54) monitors whether or not the new light emitting-receiving unit 10 is connected to a port 501 of the control device 50, and when it is detected that the new light emitting-receiving unit 10 is connected to the port 501 of the control device 50, reads the identification number from the storage 41 of the light emitting-receiving unit 10 via the port 501.

In the third embodiment, the corrector 54 acquires the identification number from the storage 41 of the light emitting-receiving unit 10, then transmits the identification number to the external server 70 via a communicator (not illustrated), and requests a decryption key (see Fig. 8B). When received the identification number from the control device 50, the external server 70 refers to the database based on the identification number, and transmits the decryption key corresponding to the identification number to the control device 50 (see Fig. 8B). When received the decryption key from the external server 70, the control device 50 passes the decryption key to the corrector 54. The corrector 54 acquires the correction data by decrypting the encrypted correction data with the decryption key.

According to the third embodiment, use of a counterfeit product of the light emitting-receiving unit 10 can be suppressed. Note that in the present embodiment, the light emitting-receiving unit 10 is not provided with a controller 50', and therefore, the structure of the light emitting-receiving unit 10 is simplified as compared to the measuring device 1' of the comparative example. Thus, it is effective to avoid imitation of the light emitting-receiving unit 10. In particular, when a measuring device 1 is mounted on an automobile as illustrated in Fig. 1A, it is important to avoid use of an inferior counterfeit product.

Note that also in the third embodiment, the control device 50 may include a plurality of ports 501. In this case, the corrector 54 monitors, for each port 501, whether or not the new light emitting-receiving unit 10 is connected thereto, and when it is detected that the new light emitting-receiving unit 10 is connected to a certain port 501, acquires a port number and the identification number and the encrypted correction data read from the storage 41 of the light emitting-receiving unit 10 via such a port 501. The corrector 54 transmits the identification number to the external server 70 to request the decryption key, acquires the decryption key corresponding to the identification number from the external server 70 to decrypt the correction data, and generates the reference table illustrated in Fig. 4 with the port number and the correction data associated with each other (in other words, updates the information in the reference table). Then, the control device 50 (corrector 54) measures coordinates using the light emitting-receiving unit 10 connected to the port 501 based on the correction data corresponding to such a port 501.

### === Summary ===

The above-described measuring device 1 includes the light emitting-receiving unit 10 and the control device 50. The light emitting-receiving unit 10 has the light emitter 21, the light receiver 31, and the storage 41. The control device 50 outputs the control signal to the light emitting-receiving unit 10, and measures the coordinates of the reflection point based on the light reception signal acquired from the light emitting-receiving unit 10. The light emitting-receiving unit 10 is connected to the control device 50 in a replaceable manner. The light emitting-receiving unit 10 can be decreased in size as compared to the measuring device 1' of the comparative example (see Fig. 10), and therefore, for the measuring device 1 of the present embodiment, the restrictions on the installation location can be reduced.

In the first embodiment and the third embodiment, the correction data is stored in the storage 41 of the light emitting-receiving unit 10. As a result, the light emitter 21, the light receiver 31, and the storage 41 that has stored the correction data according to the characteristics of the light emitter 21 and the light receiver 31 can be integrated. Further, in the first embodiment and the third embodiment, the control device 50 is configured to read the correction data from the storage 41 of the light emitting-receiving unit 10 when the light emitting-receiving unit 10 is connected to the control device 50. As a result, even if the correction data is stored in the light emitting-receiving unit 10 independent of the control device 50, the control device 50 can measure the coordinates based on the correction data.

On the other hand, in the second embodiment, the correction data is stored in the external server 70, and the identification number is stored in the storage 41 of the light emitting-receiving unit 10. In the second embodiment, the control device 50 is configured to read the identification number from the storage 41 of the light emitting-receiving unit 10 and acquire the correction data corresponding to the identification number from the external server 70 when the light emitting-receiving unit 10 is connected to the control device 50. As a result, even if the correction data is managed in a place different from the control device 50, the control device 50 can measure the coordinates based on the correction data.

The above-described control device 50 outputs the control signal corrected based on the correction data (light emission correction data) to the light emitting-receiving unit 10. The light emitting-receiving unit 10 emits the light according to the corrected control signal from the light emitter 21. As a result, it is possible to correct the variation in the light emitted from the light emitter 21 and to improve coordinate measurement accuracy.

The above-described control device 50 corrects the light reception signal based on the correction data (light reception correction data), and measures the coordinates based on the corrected light reception signal. As a result, it is possible to correct the variation in the light reception signal output from the light receiver 31 and to enhance the coordinate measurement accuracy.

The above-described control device 50 corrects the coordinates calculated based on the light reception signal based on the correction data (coordinate correction data). As a result, it is possible to suppress the influence of the error included in the calculated coordinate and to enhance the coordinate measurement accuracy.

The above-described control device 50 can be connected to the plurality of light emitting-receiving units 10, and acquires the light reception signal from each light emitting-receiving unit 10 and measures the coordinates based on each light reception signal. As a result, for the measuring device 1 of the present embodiment, the restrictions on the installation location can be reduced as compared to the measuring device 1' of the comparative example (see Fig. 10).

In addition, when the light emitting-receiving unit 10 is connected to the port 501, the above-described control device 50 stores the correction data in association with the port 501 connected to the light emitting-receiving unit 10 (see Fig. 4), and measures the coordinates using the light emitting-receiving unit 10 connected to the port 501 based on the correction data corresponding to the port 501. As a result, for each of the light emitting-receiving units 10 connected to the control device 50, it is possible to measure the coordinates according to the characteristics of each light emitting-receiving unit 10.

In the third embodiment, the encrypted correction data is stored in the storage 41 of the light emitting-receiving unit 10. When the light emitting-receiving unit 10 is connected to the control device 50, the control device 50 reads the encrypted correction data from the storage 41 of the light emitting-receiving unit 10, and acquires the correction data by decrypting the encrypted correction data. As a result, use of a counterfeit product of the light emitting-receiving unit 10 can be suppressed.

Each control device 50 of the first to third embodiments is configured connectable to the light emitting-receiving unit 10, and has the light emission controller 51, the signal acquirer 52, the measurer 53, and the corrector 54. When the light emitting-receiving unit 10 is connected, the corrector 54 acquires correction data corresponding to such a light emitting-receiving unit 10, and corrects at least one of the light emission controller 51, the signal acquirer 52, or the measurer 53 based on the correction data. As a result, the coordinates can be measured based on the correction data according to the characteristics of the light emitter 21 and the light receiver 31.

In addition, each program of the first to third embodiments causes the control device 50 to implement the light emission control function, the signal acquisition function, the measurement function, and the correction function. As a result, the coordinates can be measured based on the correction data according to the characteristics of the light emitter 21 and the light receiver 31. Note that the above-described measuring device 1 can be provided by introducing such a program into the ECU (corresponding to the control device 50) of the automobile and connecting the light emitting-receiving unit 10 to the ECU.

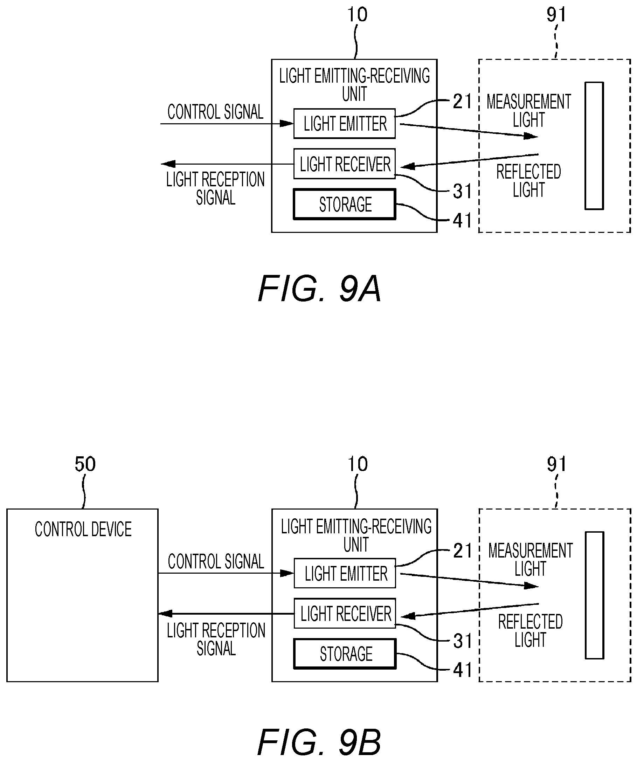

Figs. 9A and 9B are diagrams for describing operation under a predetermined condition. In the following description, a situation in which a predetermined distance is provided between the light emitting-receiving unit 10 and a target object is set, and the inside of the measurement area 91 indicated by a dotted line in the figure is set to a constant condition. Moreover, in the following description, a state in which first data is stored in the storage 41 of the light emitting-receiving unit 10 will be referred to as a "first state", and a state in which second data different from the first data is stored in the storage 41 will be referred to as a "second state". For example, in the case of the light emitting-receiving unit 10 of the first embodiment, the correction data A is stored in the storage 41 in the first state, and the correction data B is stored in the storage 41 in the second state. In the case of the light emitting-receiving unit 10 of the second embodiment, an identification number A is stored in the storage 41 in the first state, and an identification number B is stored in the storage 41 in the second state.

Fig. 9A is the diagram for describing operation when the light emitting-receiving unit 10 is operated alone. Under the predetermined condition in the measurement area 91, when a predetermined control signal is input to the light emitting-receiving unit 10, a predetermined light reception signal is output from the light emitting-receiving unit 10 in either the first state or the second state, and the light reception signal output from the light emitting-receiving unit 10 does not change between the first state and the second state. That is, even if the data in the storage 41 of the light emitting-receiving unit 10 is rewritten, the operation of the light emitting-receiving unit 10 alone does not change, and the light emitting-receiving unit 10 alone only executes predetermined operation.

Fig. 9B is the diagram for describing operation when the light emitting-receiving unit 10 of Fig. 9A is connected to the control device 50. When the light emitting-receiving unit 10 is connected to the control device 50 under the predetermined condition in the measurement area 91, at least one of the control signal or the measurement result (coordinates of the target object) changes between the first state and the second state. That is, although the light emitting-receiving unit 10 executes the predetermined operation in the first state and the second state (see Fig. 9A), the output of the control device 50 changes between the first state and the second state. By verifying the situations of Figs. 9A and 9B, it is possible to verify that the data in the storage 41 of the light emitting-receiving unit 10 changes the operation of the control device 50 (corrects the operation of the control device 50).

Although the embodiments of the present invention have been described in detail above, the present invention is not limited to the above-described embodiments and includes various modifications. In addition, the above-described embodiments have been described in detail in order to describe the present invention in an easy-to-understand manner, and are not necessarily limited to those having all the described configurations. Part of the configurations of the above-described embodiments can be added to, deleted from, or replaced with other configurations.

The present international application claims priority based on Japanese Patent Application No. 2022-134636 filed on August 26, 2022, and the entire contents of Japanese Patent Application No. 2022-134636 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

- 1: Measuring Device
- 1': Measuring Device of Comparative Example
- 10: Light Emitting-Receiving Unit
- 21: Light Emitter
- 211: Light Emitting Element
- 22: Light Projection Optical System
- 31: Light Receiver
- 311: Light Receiving Element
- 32: Light Receiving Optical System
- 41: Storage
- 50: Control Device
- 50': Controller
- 501: Port
- 51: Light Emission Controller
- 52: Signal Acquirer
- 53: Measurer
- 54: Corrector
- 60: Inspection Control Device
- 61: Light Emission Inspection Device
- 62: Reference Light Emitting Device
- 63: Target Plate
- 70: External Server
- 91: Measurement Area

## Claims

1. A measuring device comprising:
a light emitting-receiving unit including a light emitter that emits light according to a control signal, a light receiver that receives reflected light of the light emitted from the light emitter and outputs a light reception signal, and a storage that stores correction data; and
a control device connected to the light emitting-receiving unit in a replaceable manner and configured to output the control signal to the light emitting-receiving unit and measure a coordinate of a reflection point at which the reflected light is generated based on the light reception signal acquired from the light emitting-receiving unit,
wherein the control device
reads the correction data from the storage of the light emitting-receiving unit when the light emitting-receiving unit is connected to the control device, and
measures the coordinate based on the correction data.

2. The measuring device according to claim 1, wherein
the control device outputs the control signal corrected based on the correction data to the light emitting-receiving unit, and
the light emitting-receiving unit emits light according to the corrected control signal from the light emitter.

3. The measuring device according to claim 1, wherein
the control device corrects the light reception signal based on the correction data, and measures the coordinate based on the corrected light reception signal.

4. The measuring device according to claim 1, wherein
the control device corrects the coordinate based on the correction data.

5. The measuring device according to any one of claims 1 to 4, wherein
the control device
is connectable to a plurality of the light emitting-receiving units, and
acquires the light reception signal from each of the light emitting-receiving units and measures the coordinate based on each of the light reception signals.

6. The measuring device according to claim 5, wherein
the control device
includes a plurality of ports for connecting the light emitting-receiving units to the control device in a replaceable manner,
stores the correction data read from the light emitting-receiving unit in association with the port to which the light emitting-receiving unit is connected when the light emitting-receiving unit is connected to the port of the control device, and
measures the coordinate using the light emitting-receiving unit connected to the port based on the correction data corresponding to the port.

7. The measuring device according to any one of claims 1 to 4, wherein
the storage stores encrypted correction data, and
when the light emitting-receiving unit is connected to the control device, the control device reads the encrypted correction data from the storage of the light emitting-receiving unit, and acquires the correction data by decrypting the encrypted correction data.

8. A measuring device comprising:
a light emitting-receiving unit including a light emitter that emits light according to a control signal, a light receiver that receives reflected light of the light emitted from the light emitter and outputs a light reception signal, and a storage that stores an identification number; and
a control device connected to the light emitting-receiving unit in a replaceable manner and configured to output the control signal to the light emitting-receiving unit and measure a coordinate of a reflection point at which the reflected light is generated based on the light reception signal acquired from the light emitting-receiving unit,
wherein the control device
reads the identification number from the storage of the light emitting-receiving unit when the light emitting-receiving unit is connected to the control device,
acquires correction data corresponding to the identification number from an external server, and
measures the coordinate based on the correction data.

9. A control device connectable to a light emitting-receiving unit including a light emitter and a light receiver, comprising:
a light emission controller that outputs a control signal for emitting light from the light emitter to the light emitting-receiving unit;
a signal acquirer that acquires a light reception signal of the light receiver from the light emitting-receiving unit;
a measurer that measures a coordinate of a reflection point at which reflected light is generated based on the light reception signal; and
a corrector that acquires correction data corresponding to the light emitting-receiving unit when the light emitting-receiving unit is connected and corrects at least one of the light emission controller, the signal acquirer, or the measurer based on the correction data.

10. A program causing a control device connectable to a light emitting-receiving unit including a light emitter and a light receiver to implement
a light emission control function of outputting a control signal for emitting light from the light emitter to the light emitting-receiving unit,
a signal acquisition function of acquiring a light reception signal of the light receiver from the light emitting-receiving unit,
a measurement function of measuring a coordinate of a reflection point at which reflected light is generated based on the light reception signal, and
a correction function of acquiring correction data corresponding to the light emitting-receiving unit when the light emitting-receiving unit is connected and correcting at least one of the light emission control function, the signal acquisition function, or the measurement function based on the correction data.

11. A measuring device comprising:
a light emitting-receiving unit including a light emitter that emits light according to a control signal, a light receiver that receives reflected light of the light emitted from the light emitter and outputs a light reception signal, and a storage; and
a control device connected to the light emitting-receiving unit in a replaceable manner and configured to output the control signal to the light emitting-receiving unit and generate a measurement result based on the light reception signal acquired from the light emitting-receiving unit,
wherein when a state in which first data is stored in the storage is a first state and a state in which second data different from the first data is stored in the storage is a second state,
in a case where a predetermined control signal is input to the light emitting-receiving unit under a predetermined condition, the light reception signal output from the light emitting-receiving unit does not change between the first state and the second state, and
in a case where the light emitting-receiving unit is connected to the control device under the predetermined condition, at least one of the control signal or the measurement result changes between the first state and the second state.
